Europäisches Patentamt

European Patent Office

Office européen des brevets

(11) Numéro de publication: **0 345 225**
**A1**

## (12) DEMANDE DE BREVET EUROPEEN

(21) Numéro de dépôt: **89810415.3**

(22) Date de dépôt: **02.06.89**

(51) Int. Cl.⁴: **B 23 B 13/12**

(30) Priorité: **03.06.88 CH 2131/88**

(43) Date de publication de la demande:
**06.12.89 Bulletin 89/49**

(84) Etats contractants désignés:
**CH DE ES FR GB IT LI**

(71) Demandeur: **von Niederhäusern, Francis
55, rue Centrale
CH-2740 Moutier (CH)**

(72) Inventeur: **von Niederhäusern, Francis
55, rue Centrale
CH-2740 Moutier (CH)**

(74) Mandataire: **Tordion, Serge
c/o I C B Ingénieurs Conseils en brevets S.A. Passage
Max Meuron 6/8
CH-2001 Neuchâtel (CH)**

(54) **Dispositif de réglage de la fermeture d'un canon de guidage pour tour automatique à poupée mobile.**

㉗ Le dispositif de réglage du serrage du canon de guidage (16) pour tour automatique à poupée mobile comprend un moteur (1) à courant continu qui, par l'intermédiaire d'un mécanisme de transmission à cardan (4) et d'engrenages contenu dans un boîtier (10), entraîne un organe (19) vissé dans le canon (16) pour en assurer la fermeture et l'ouverture. Par l'intermédiaire d'un potentiomètre (25), une commande électronique (2) envoie au moteur (1), à travers la ligne (24) un courant d'intensité déterminée. Sous l'action de ce courant, le moteur (1) développe un couple bien déterminé qui, par le mécanisme (4), les engrenages du boîtier (10) et l'organe (19), plaque le canon (16) contre la barre de matière (18). Un compteur, réglé par un bouton (46), fait alors reculer le moteur (1) d'un angle déterminé, en rapport avec le jeu nécessaire entre la barre (18) et le canon (16). Alternativement ou cumulativement, la commande (2) comprend des compteurs réglés par des boutons (36, 37), pour faire tourner le moteur (1) d'angles déterminés, afin d'augmenter momentanément la force de serrage du canon (16).

Fig. 1

EP 0 345 225 A1

**Description**

## DISPOSITIF DE REGLAGE DE LA FERMETURE D'UN CANON DE GUIDAGE POUR TOUR AUTOMATIQUE A POUPEE MOBILE

La présente invention a trait aux dispositifs de réglage de la fermeture des canons de guidage pour tour automatique à poupée mobile, en particulier aux dispositifs comprenant un organe vissé pour assurer la fermeture et l'ouverture du canon.

Les dispositifs connus de ce type sont conçus, en général, pour opérer le réglage en question à la main, au début de l'usinage d'un lot de barres. Si le tour est équipé d'un embarreur automatique, le degré de fermeture du canon n'est pas modifié au cours de cet usinage. Dans le cas où les barres sont introduites dans le tour à la main, le degré de fermeture du canon est réglé, au plus, au début de l'usinage de chaque barre.

Lorsque le canon a atteint ce degré de fermeture, la barre de matière a encore un jeu de l'ordre du millième de millimètre dans le canon, pour pouvoir coulisser et tourner dans celui-ci sans risque de grippage. Or, elle n'est pas tenue convenablement, si le cycle de travail comprend des opérations d'usinage la soumettant à de gros efforts radiaux. Il serait par conséquent souhaitable que la barre soit bien serrée dans le canon au cours de telles opérations. Toutefois, les dispositifs connus ne permettent pas de modifier le degré de fermeture des canons au cours des cycles d'usinage.

En outre, le diamètre des barres d'un lot n'est pas toujours rigoureusement le même. Parfois, ce diamètre varie quelque peu le long d'une même barre, en particulier si la matière des barres n'est pas absolument homogène.

Ces variations de diamètre des barres de matière ont pour conséquence que le degré de fermeture des canons, pour leur conférer un guidage convenable, doit être réglé en tenant compte des plus forts diamètres des barres, afin d'éviter une usure des canons, un marquage des barres, une avance défectueuse de celles-ci ou même un grippage. Il s'ensuit que les parties de plus petit diamètre des barres ne sont plus tenues convenablement par ces canons. Elles sont par conséquent excentrées dans ceux-ci par des efforts radiaux d'outils du tour, ce qui entraîne une imprécision des pièces usinées.

L'invention vise à remédier aux défauts susmentionnés en créant un dispositif qui règle le degré de fermeture du canon afin qu'il guide ou tienne la barre de matière en cours d'usinage de façon à assurer un usinage précis.

A cet effet, dans le dispositif selon l'invention, l'organe vissé, qui assure la fermeture et l'ouverture du canon, est soumis à l'action de moyens capables de développer différents couples réglables et d'en transmettre l'un ou l'autre au dit organe dans le sens de la fermeture du canon.

La transmission au dit organe de différents couples réglables a pour effet de le visser avec des forces déterminées. Cela permet notamment de serrer la barre avec une force suffisante, lorsque la pièce en cours d'usinage est soumis à de gros efforts radiaux par les outils du tour et/ou de la guider en déplacement axial toujours dans les mêmes conditions tout au long de l'usinage, même si le diamètre de la matière varie le long d'une même barre ou d'une barre à l'autre d'un même lot.

Les formes spéciales d'exécution définies par la revendication 2 ont deux avantages distincts. Si les moyens capables de développer un couple déterminé, réglable, le transmettent à l'organe vissé du canon au début de l'usinage de chaque séquence d'un nombre déterminé de pièces, cela permet au canon de guider les barres de matière toujours dans les mêmes conditions, même si le diamètre de ces barres varie quelque peu de l'une à l'autre ou le long d'une même barre.

En revanche, si les moyens en question développent un autre couple, supérieur au couple déterminé, au début d'une phase bien délimitée du cycle d'usinage de chaque pièce, cela permet d'enserrer fortement les barres pendant les phases en question. Un tel serrage accru est éminemment avantageux lorsque les pièces en cours d'usinage sont soumises à de gros efforts radiaux par les outils du tour.

En provoquant une rotation de l'organe vissé dans le canon d'un certain petit angle, dans le sens de l'ouverture du canon, cela chaque fois que le couple déterminé a été transmis à cet organe, l'élément défini par la revendication 3 a l'avantage de permettre un réglage aisé et précis du degré de fermeture du canon, en vue de guider les barres toujours dans les mêmes conditions, tout au long de leur usinage.

Les formes spéciales d'exécution définies par la revendication 4 ont l'avantage de tenir compte du fait que le passage dans le canon d'une barre ou d'une section de barre de plus fort diamètre ne produit pas nécessairement un dévissage du dit organe.

La revendication 5 définit des moyens aussi simples qu'efficaces pour développer les couples désirés. Le couple développé par un moteur à courant continu dépend, en effet, de l'intensité du courant qui l'alimente. Il suffit donc d'alimenter ce moteur avec un courant d'une certaine intensité pour qu'il développe un couple correspondant. Le réglage de cette intensité permet ainsi de régler le couple développé par le moteur.

Les formes spéciales d'exécution définies par la revendication 6 ont l'avantage de permettre aisément un fort serrage du canon, afin que la barre de matière soit tenue plus fermement pendant certaines opérations d'usinage, telles par exemple que des moletages, des fonçages, des peignages, des fraisages, des perçages transversaux.

Les particularités définies par la revendication 7 garantissent le retour au guidage normal du canon, après une phase de serrage accru, cela grâce à des moyens aussi simples que sûrs.

La dynamo tachymétrique définie par la revendication 8 a pour effet d'empêcher un emballement du moteur, suivi d'un choc des organes de serrage du canon sur la barre et un guidage de celle-ci dans de mau vaises conditions.

Une forme d'exécution du dispositif selon l'invention est représentée schématiquement et à simple titre d'exemple au dessin annexé, dans lequel:

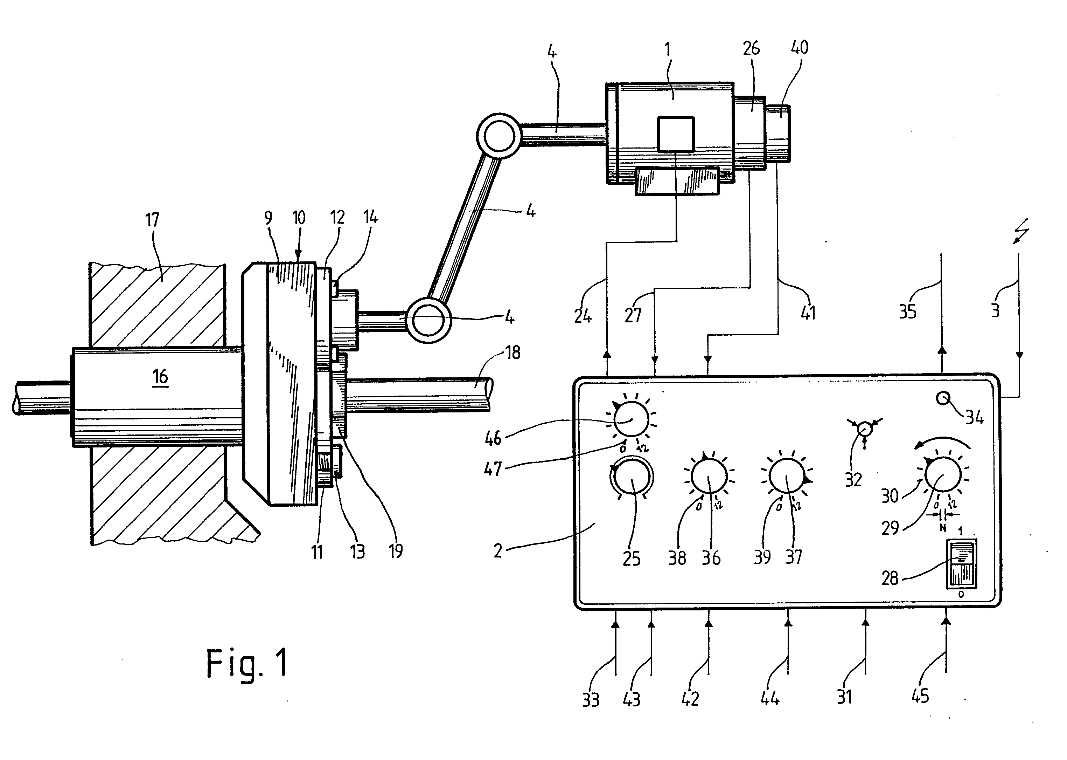

la Fig. 1 en est une vue en élévation;

la Fig. 2 est une vue depuis la droite, à échelle agrandie, d'une partie de la Fig. 1, et

la Fig. 3 est une coupe selon la ligne III-III de la Fig. 2.

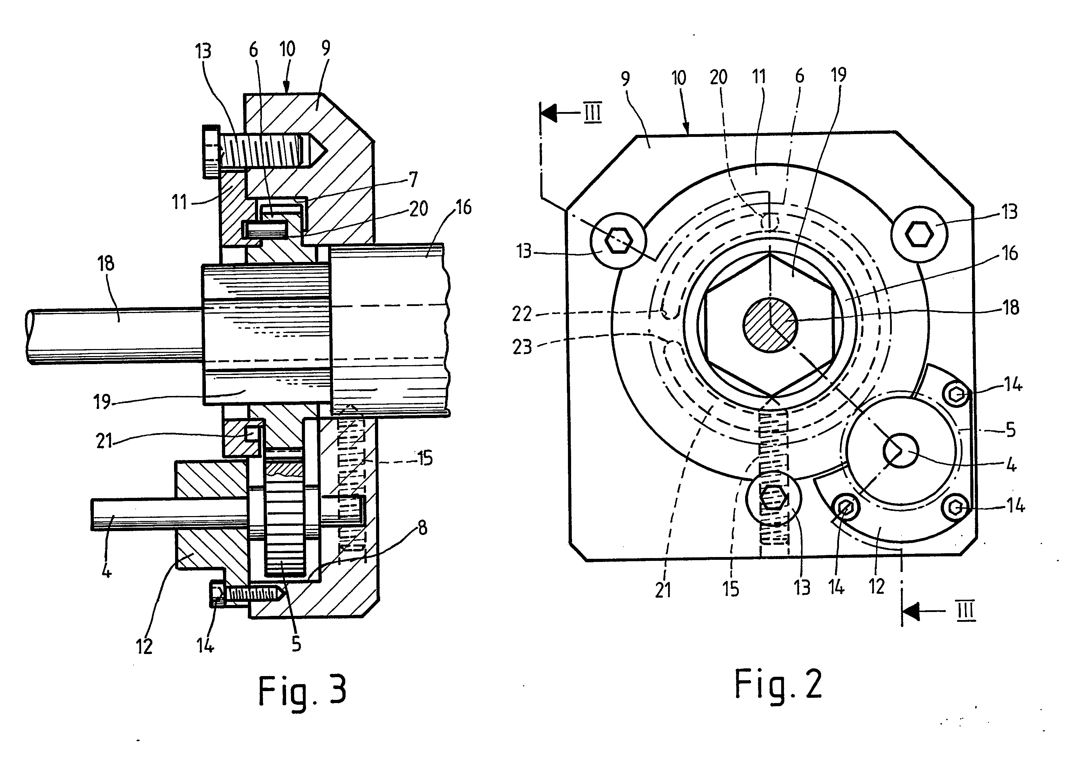

Le dispositif représenté comprend un moteur 1 à courant continu et une commande électronique 2, qui est alimentée par une ligne 3. Le moteur 1 est relié cinématiquement par un mécanisme de transmission à cardan 4, ou par un câble Bowden à un pignon 5 (Fig. 2). Ce dernier engrène avec une couronne dentée 6. La couronne 6 et le pignon 5 sont logés dans des creusures cylindriques, respectivement 7, 8 du corps 9 d'un boîtier 10. Des couvercles 11, 12 emprisonnent respectivement la couronne 6 et le pignon 5 dans le corps 9. Le couvercle 11 est fixé à ce corps par trois vis 13 à six pans creux, engagées directement dans le corps 9, seule une partie de la tête de ces vis s'étendant au-dessus du bord du couvercle 11. Le couvercle 12 est également fixé au corps 9 par trois vis 14 à six pans creux, engagées dans le corps 9 en passant à travers des forures d'une collerette du couvercle 12.

Le corps 9 du boîtier 10 est fixé par trois vis, dont une seule, 15, est représentée au dessin, sur une partie d'un canon 16, qui fait saillie de la face postérieure du support 17 des outils radiaux (non représentés) du tour et qui sert à guider la barre de matière 18 en cours d'usinage, en en maintenant l'extrémité antérieure contre l'action des outils du tour. La couronne dentée 6 est engagée sur une partie polygonale, qui fait saillie à l'arrière du canon 16, d'un organe de serrage 19 de celui-ci. L'organe 19 est vissé dans le canon 16. Dans un but exposé ci-après, la couronne 6 porte une groupille 20, qui plonge dans une rainure annulaire 21 du couvercle 11, de façon à limiter les rotations de la couronne 6 et donc de l'organe 19 entre les extrémités 22, 23 de la rainure 21. La position de la groupille 20, représentée à la Fig. 2, correspond à un état partiellement ouvert du canon 16.

Le moteur 1 est alimenté à partir de la commande électronique 2 par une ligne 24. Ci-après sont décrits en premier lieu les éléments qui alimentent le moteur 1 de façon à lui faire amener le canon 16 au degré de fermeture auquel il assure le guidage des barres de matière dans les meilleures conditions, toujours les mêmes, tout au long de l'usinage d'un lot de barres et dans l'hypothèse où le diamètre de ces barres n'est pas rigoureusement constant.

Pour guider les barres de matière de cette façon, il importe que le diamètre du maître couple du canon, en position de fermeture, soit ajusté à celui de la section de la barre de matière, qui est engagée dans le canon, de telle manière que cette section de barre ait un très léger jeu, de l'ordre du millième de millimètre, dans le canon, afin qu'elle puisse coulisser sans coincement à travers le canon. Lorsque le degré de fermeture du canon est tel que le jeu en question est constant tout au long de l'usinage d'un lot de barres de matière, on dira dans la suite de cet exposé que le guidage, assuré par le canon, est "normal".

En raison des tolérances de fabrication et de fonctionnement, il n'est pas indiqué de faire développer au moteur 1 un couple qui amènerait le canon 16 d'un seul coup en position de guidage normal. Le dispositif décrit l'y amène en deux temps.

Dans un premier temps, l'organe 19 est sollicité par le moteur 1, de façon que le canon 16 s'applique sans jeu contre la barre de matière 18. Au cours d'un second temps, le moteur 1 fait tourner l'organe 19, dans le sens de l'ouverture du canon, d'un angle en rapport avec le jeu désiré de la section de barre 18 engagée dans le canon 16.

Pour exécuter le premier temps de l'amenée du canon 16 en position de guidage normal, la commande électronique 2 comprend un potentiomètre 25. Ce potentiomètre 25 permet de régler à volonté l'intensité du courant d'alimentation du moteur 1. Plus cette intensité est grande, plus le couple développé par le moteur 1 est élevé. Comme le couple développé par ce moteur 1 est transmis par le mécanisme 4 au pignon 5, puis à la couronne 6 et enfin à l'organe de serrage 19 du canon 16, ce couple a pour effet de visser cet organe dans le canon 16 avec une force corres pondant au couple du moteur 1, donc bien déterminée.

Pour appliquer le canon 16 sans jeu contre la barre 18, il suffit d'augmenter progressivement l'intensité du courant d'alimentation du moteur 1 à l'aide du potentiomètre 25. Le résultat recherché est obtenu, lorsqu'une augmentation de l'intensité du courant dans la ligne 24 par le potentiomètre 26 n'engendre pratiquement plus de rotation du moteur 1. Cela signifie, en effet, que le mouvement de fermeture du canon est stoppé par la matière. Lorsque le serrage décrit a ainsi été réalisé, le potentiomètre 25 n'est plus touché, à moins que ce serrage ne se révèle ou trop fort ou trop faible.

En service, si le courant réglé par le potentiomètre 25 était envoyé tel quel au moteur 1, alors que le canon 16 serait ouvert, le moteur 1, ne rencontrant pratiquement aucune résistance, s'emballerait; un choc des organes de serrage du canon 16 sur la barre de matière 18 en résulterait, de même qu'un serrage excessif, en raison de l'inertie du moteur 1 et des organes qu'il entraîne. Pour éviter cela, une dynamo tachymétrique 26 est montée sur l'arbre du moteur 1. Le courant qu'elle envoie à la commande électronique 2, par la ligne 27, réduit d'autant celui de la ligne 24. La dynamo 26 a ainsi pour effet de limiter la vitesse de rotation du moteur 1 à une valeur qui peut être choisie. Lorsque le canon 16 se plaque contre la barre de matière 18, la vitesse de rotation du moteur 1 en est pratiquement réduite à zéro. Le courant maximum, réglé par le potentiomètre 25, est alors envoyé au moteur 1 par la ligne 24. Sous l'action de ce courant maximum, le moteur 1 développe un couple bien déterminé.

Le second temps de l'amenée du canon 16 en position de guidage normal est assuré par un compteur de la commande 2. Ce compteur peut être réglé par un bouton 46. Le bouton 46 porte un index qui se déplace en regard d'une graduation 47 en unités d'angle.

Aussitôt que le moteur 1 est stoppé par la barre de matière 18, le compteur, réglé par le bouton 46, est excité. Il fait alors tourner le moteur 1, dans le sens de l'ouverture du canon 16, d'un angle correspondant à la division de la graduation 47, en regard de laquelle se trouve l'index du bouton 46. A cet angle de rotation du moteur 1 et, par conséquent, de l'organe 19, correspond le jeu de la barre 18 dans le canon 16. Au terme de cette dernière rotation du moteur 1, le canon 16 est en position de guidage normal. Le potentiomètre 25 et le compteur réglé par le bouton 46 confèrent, en effet, le même jeu de la barre dans le canon, chaque fois qu'ils sont excités lorsque le canon 16 est ouvert.

Le guidage normal est prévu pour des opérations qui n'exercent pratiquement pas d'effort radial sur la matière, comme par exemple le tournage.

Pour réaliser automatiquement le guidage normal du canon 16, en cours d'usinage et dans de bonnes conditions, la commande électronique 2 comprend, outre un interrupteur principal 28, encore un compteur, qui peut être réglé par un bouton 29. Ce bouton 29 porte un index qui se déplace en regard d'une graduation 30, en unités d'angle. La commande électronique 2 est excitée de façon non représentée par des organes du tour, éventuellement par son embarreur automatique, ou par une commande numérique du tour. Elle est principalement destinée à recevoir un signal produisant le réglage du guidage normal du canon 16.

Si le diamètre de chaque barre d'un même lot est bien constant et si seul ceux des barres du lot diffèrent quelque peu, il suffit d'exciter la commande 2 par l'embarreur. A la fin de l'usinage d'une barre, ce dernier envoie un signal à la commande 2 par la ligne 31, qui excite un élément 32. L'élément 32 envoie alors un courant de polarité inverse au moteur 1, pour le faire tourner dans le sens de l'ouverture du canon 16, jusqu'à ce que le groupille 20 de la couronne dentée 6 bute contre l'extrémité 22 de la rainure 21.

Avant d'usiner un lot de barres de matière, les vis 13 du boîtier 10 sont desserrées et le couvercle 11 tourné dans une position angulaire telle que la groupille 20 soit encore relativement éloignée de l'extrémité 23 de la rainure 21, quand le canon 16 est en position de guidage normal, mais que ce canon soit convenablement ouvert, lorsque la groupille 20 repose contre l'extrémité 22 de cette rainure 21. Après ce réglage du couvercle 11, les vis 13 sont évidemment resserrées.

Lorsqu'une nouvelle barre de matière a été mise en place dans le tour, l'embarreur envoie un second signal à la commande 2 par la ligne 33. Cette commande 2 alimente alors le moteur 1 pour lui faire amener le canon 16 en position de guidage normal, comme décrit ci-dessus.

En revanche, si les barres de matière d'un lot n'ont pas un diamètre constant le long de chacune d'elles, il faut envoyer à la commande 2 plus de signaux de réglage du guidage normal du canon 16. Selon la longueur des pièces à produire, un tel signal est envoyé à la commande 2 avant le début de l'usinage de chaque pièce ou après l'usinage de chaque séquence d'un nombre déterminé de pièces. En l'absence de commande numérique du tour, ces signaux sont produits à l'aide d'un taquet calé sur l'arbre à cames du tour, qui ferme un contact électrique à chaque tour de cet arbre ou qui assure la fermeture d'un tel contact après un nombre déterminé de tours du dit arbre. L'émission de chacun de ces signaux produit aussi l'arrêt des opérations d'usinage du tour.

Lorsque la commande 2 reçoit un tel signal, c'est d'abord le compteur réglé par le bouton 29 qui est excité. Ce compteur fait alors tourner le moteur 1 dans le sens de l'ouverture du canon 16, du nombre d'unités d'angle qui est indiqué par la division de la graduation 30, en regard de laquelle se trouve l'index du bouton 29. La position du bouton 29 doit être choisie de façon que le compteur qu'il règle fasse tourner le moteur 1 d'un angle total assez grand pour que le canon 16 s'ouvre à un diamètre quelque peu supérieur au plus fort diamètre des barres de matière du lot à usiner.

Aussitôt après que le canon 16 a ainsi été ouvert, les circuits du potentiomètre 25 et du compteur réglé par le bouton 46 sont excités, de sorte que le moteur 1 ramène le canon 16 en position de guidage normal. Lorsque cette dernière position est atteinte, un élément 34 de la commande 2 fait redémarrer les opérations du tour. Si, pour une raison ou une autre, la position en question n'est pas atteinte, l'élément 34 laisse le tour à l'arrêt. Par une ligne 35, il actionne une alarme optique ou acoustique (non représentée).

Pendant certaines opérations d'usinage, il convient d'enserrer la barre de matière 18 fermement dans le canon 16. Pour cela, la commande 2 comprend deux compteurs, que des boutons 36, 37 permettent de régler. Ces boutons 36, 37 sont munis d'index qui se déplacent en regard de graduations 38, 39 en unités d'angle. Un encodeur 40 est aussi monté sur l'arbre du moteur 1, pour détecter les positions angulaires de cet arbre, en particulier celle qu'il occupe lors du guidage normal du canon 16 ou du degré de fermeture conventionnel de ce canon. L'encodeur 40 transmet cette information par la ligne 41 à la commande 2, qui la mémorise.

Un serrage accru du canon 16 est utile, notamment lorsque des outils du tour exercent un effort radial notable sur la matière. C'est le cas, en particulier lors d'une opération de moletage, éventuellement de peignage ou lors d'un fonçage important. On remarquera que pendant de telles opérations, la barre de matière 18 ne se déplace pas à travers le canon 16.

Lorsqu'une opération de cette nature va être entreprise, un taquet, monté sur l'arbre à cames et réglé sur la came qui commande cette opération, ferme un contact électrique, qui envoie un signal à la commande 2 par la ligne 42. Au moment où le compteur réglé par le bouton 36 reçoit ce signal, il fait tourner le moteur 1, dans le sens de la fermeture du canon, d'un nombre d'unités d'angle égal à celui indiqué par la division de la graduation 38, en regard de laquelle se trouve l'index du bouton 36. Cette rotation du moteur 1 a naturellement pour effet de presser les organes de serrage du canon 16 contre la barre 18. Comme cette barre ne coulisse pas dans le canon 16 au cours de l'opération d'usinage considérée, elle ne risque pas d'être marquée par les organes de serrage du canon. La position angulaire du bouton 36 sera naturellement choisie en fonction de la force de serrage désirée du canon pour l'opération d'usinage prévue. Lorsque cette opération particulière est terminée, un taquet de l'arbre à cames ferme un contact électrique, qui envoie un signal à la commande 2 par la ligne 43. A réception de ce signal, la commande 2 ramène le moteur 1 dans la position mémorisée précédemment, qui correspond au guidage normal du canon 16.

Le tour peut être appelé à effectuer des opérations d'usinage encore plus contraignantes que celles envisagées ci-dessus, par exemple des fraisages ou des perçages transversaux. Au cours de telles opérations, la poupée est arrêtée; la barre 18 ne tourne donc pas. Le canon 16 peut, par conséquent, enserrer cette barre encore plus fortement que précédemment. A cette fin, un taquet de l'arbre à cames ferme un contact électrique qui envoie un signal à la commande 2 par la ligne 44. Ce signal excite le compteur réglé par le bouton 37 qui, comme celui réglé par le bouton 36, fait tourner le moteur 1 d'un nombre d'unités d'angle égal à celui indiqué par la division de la graduation 39, en regard de laquelle se trouve l'index du bouton 37. Ce nombre d'unités d'angle est évidemment supérieur à celui commandé par le bouton 36, de sorte que le canon 16 enserre alors la barre 18 encore plus fortement que précédemment. A la fin de cette opération d'usinage, un taquet de l'arbre à cames ferme le contact qui envoie un signal à la commande 2 par la ligne 43, ce qui fait retourner le moteur 1 à la position correspondant au guidage normal.

Si, pour une raison ou une autre, le moteur 1 n'atteint pas les positions commandées par les compteurs réglés par les boutons 36, 37 ou s'il ne revient pas ensuite à la position de guidage normal, l'encodeur 40 le signale à la commande 2 et l'élément 34 ne permet pas au tour de poursuivre ses opérations. En même temps, l'élément 34 envoie, par la ligne 35, le signal d'alarme prévu.

Lorsque le cycle des opérations du tour comporte un jet de barre, un taquet de l'arbre à cames ferme un contact électrique juste avant que le jet de barre ne doive se produire. Ce contact envoie alors un signal par la ligne 45, qui excite directement le compteur réglé par le bouton 29. Comme décrit précédemment, ce compteur commande le moteur 1, qui ouvre de ce fait le canon 16 suffisamment pour que la barre de matière en cours d'usinage puisse coulisser très librement à travers lui. Le compteur réglé par le bouton 29 attend alors que le jet de barre ait eu lieu avant d'exciter le circuit du potentiomètre 25 afin de ramener le moteur 1 dans la position mémorisée de guidage normal.

Dans le cas d'un tour équipé d'une commande numérique, c'est évidemment la mémoire de cette commande qui serait appelée à envoyer les signaux à la commande électronique 2, en lieu et place des taquets de l'arbre à cames et des contacts correspondants décrits.

Bien que dans la forme d'exécution décrite, la commande électronique 2 comprenne deux compteurs différents pour accroître la force de serrage du canon 16, il est bien clair que dans d'autres formes d'exécution, cette commande électronique pourrait n'en posséder aucun, si un serrage accru du canon pendant une certaine phase des cycles d'usinage n'était pas désiré, ou un seul, ou, au contraire, plus de deux.

Par ailleurs, dans une autre forme d'exécution, prévue pour usiner des barres dont les variations de diamètre sont négligeables, voire inexistantes, la commande 2 ne comprendrait évidemment que les éléments destinés à accroître le serrage du canon à partir de la position de l'organe 19, réglée une fois pour toutes, au début de l'usinage d'un lot de barres.

D'autres variantes du dispositif de réglage selon l'invention seront conçues sans difficulté par les hommes du métier. Par exemple, des jauges de contrainte pourraient être collées à des pièces du canon 16 ou insérées entre des paires de pièces de ce canon, pressées l'une contre l'autre, afin d'arrêter le moteur 1, lorsque le canon 16 est arrivé dans la position voulue.

Le dispositif selon l'invention peut servir à fermer de façon bien déterminée n'importe quel canon de guidage de bonne facture. Il sera cependant particulièrement intéressant avec des canons à rouleaux et plus spécialement avec le canon décrit dans ma demande de brevet suisse N° 1571/88-0, qui possède une plage de réglage relativement étendue.

**Revendications**

1. Dispositif de réglage de la fermeture d'un canon de guidage pour tour automatique à poupée mobile destiné à usiner des barres de matières, comprenant un organe vissé, qui assure la fermeture et l'ouverture du canon, caractérisé en ce que cet organe (19) est soumis à l'action de moyens (1) capables de développer différents couples réglables et d'en transmettre l'un ou l'autre au dit organe (19) dans le sens de la fermeture du canon (16).

2. Dispositif selon la revendication 1, caractérisé en ce que les dits moyens (1) sont capables de développer un premier des dits couples et de le transmettre au dit organe (19) au début de l'usinage de chaque séquence d'un nombre déterminé de pièces et au moins un autre couple, supérieur au premier, au début d'une phase bien délimitée du cycle d'usinage de chaque pièce.

3. Dispositif selon la revendication 2, caractérisé en ce qu'il comprend un élément (46) réglable, qui provoque une rotation d'un petit angle correspondant du dit organe (19), dans le sens de l'ouverture du canon (16), chaque fois que les dits moyens (1) ont transmis le premier des dits couples à cet organe (19).

4. Dispositif selon l'une des revendications 2 ou 3, caractérisé en ce que, périodiquement, au cours de l'usinage, le tour ou sa commande numérique provoque l'excitation des dits moyens (1) pour leur faire tourner brièvement le dit organe (19) d'un certain angle dans le sens de l'ouverture du canon, avant de leur faire développer à nouveau le premier des dits couples.

5. Dispositif selon l'une des revendications 1 à 4, caractérisé en ce que les dits moyens comprennent un moteur à courant continu (1) et une commande électronique (2), excitée par le tour ou par une commande numérique de celui-ci et qui envoie à ce moteur (1) des courants d'alimentation dont l'intensité maximum est bien déterminée et réglable.

6. Dispositif selon la revendication 5, caractérisé en ce que la dite commande électronique (2) comprend au moins un élément (36, 37) qui peut être excité par le tour ou sa commande numérique, au début d'au moins une phase bien délimitée de chaque cycle d'usinage, de façon à alimenter le dit moteur (1) par au moins un courant d'intensité supérieure à cette du courant d'alimentation du moteur (1) pendant les autres phases des cycles d'usinage.

7. Dispositif selon la revendication 6, caractérisé par un encodeur (40), qui est monté sur l'arbre du dit moteur (1) et qui transmet à la commande électronique (2) la position angulaire que le dit moteur (1) atteint lors du guidage normal, cette position étant mémorisée par la commande électronique (2), qui ramène le dit moteur (1) dans la dite position à la fin de chaque phase de serrage accru.

8. Dispositif selon la revendication 5, caractérisé par une dynamo tachymétrique (26) qui est montée sur l'arbre du dit moteur (1) et qui est couplée à la commande électronique (2) de façon à réduire l'intensité du courant d'alimentation du moteur (1) au point d'en maintenir la vitesse de rotation à vide au-dessous d'une certaine limite.

Fig. 1

EP 0 345 225 A1

EP 0 345 225 A1

**Fig. 3**

**Fig. 2**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | WO-A-8 701 318  (JENS)<br>* Pages 6,7; page 8, lignes 1-7; figure 4 * | 1 | B 23 B  13/12 |
| A | | 2 | |
| | --- | | |
| Y | FR-A-2 110 984  (SCHAMMBERGER)<br>* Page 5, lignes 1-17 * | 1 | |
| | --- | | |
| A | US-A-3 213 721  (MEGEL) | | |
| | --- | | |
| A | FR-A-2 434 672  (NEUKOMM) | | |
| | --- | | |
| A | US-A-3 228 271  (FLUSKEY) | | |
| | ----- | | |

DOMAINES TECHNIQUES
RECHERCHES (Int. Cl.4)

B 23 B  13/00

Le présent rapport a été établi pour toutes les revendications

| Lieu de la recherche | Date d'achèvement de la recherche | Examinateur |
|---|---|---|
| LA HAYE | 12-09-1989 | BOGAERT F.L. |

EPO FORM 1503 03.82 (P0402)